# EUROPEAN PATENT APPLICATION

(11) **EP 3 889 669 A1**
(43) Date of publication of application: **06.10.2021**
(21) Application number: 19888435.5
(22) Date of filing: 01.11.2019
(51) Int. Cl.: G02B 27/01, B60K 35/00

(54) **HEAD-UP DISPLAY**

(30) Priority: 30.11.2018 JP 2018225179
(71) Applicant: KOITO MANUFACTURING CO., LTD., Minato-ku Tokyo 108-8711 (JP)
(72) Inventor: TOYOSHIMA Takanobu, Shizuoka-shi, Shizuoka 424-8764 (JP)
(74) Representative: Hoffmann Eitle
(86) International application number: PCT/JP2019/042973
(87) International publication number: WO 2020/110598

(57) **Abstract**

A HUD 42 is provided with an image generating unit 424 for emitting light for generating a predetermined image, a light guide body 426 for propagating the light emitted from the image generating unit 424 while causing total reflection thereof, an incidence HOE 425 for changing the direction of the light so that the light emitted from the image generating unit 424 undergoes total reflection inside the light guide body 426, an emission HOE 427 for changing the direction of the light so that the light propagated inside the light guide body 426 while undergoing total reflection is emitted from the light guide body 426, and a microlens array 428 for refracting incident light in a predetermined direction and emitting the light. The microlens array 428 is provided after the emission HOE 427 in the optical path of the light.

## Description

### TECHNICAL FIELD

The present disclosure relates to a head-up display.

### BACKGROUND ART

In a future autonomous driving society, it is expected that visual communication between a vehicle and a person becomes more important. For example, it is expected that visual communication between a vehicle and an occupant of the vehicle becomes more important. In this regard, the visual communication between the vehicle and the occupant can be implemented using a head-up display (HUD). The head-up display can implement so-called augmented reality (AR) by projecting an image or a video onto a windshield or a combiner, and superimposing the image on a real space through the windshield or the combiner so as to cause the occupant to visually recognize the image.

As an example of a head-up display, Patent Literature 1 discloses a display device including an optical system for displaying a stereoscopic virtual image using a transparent display medium. The display device projects light onto a windshield or a combiner within a field of view of a driver. A part of the projected light passes through the windshield or the combiner, but the other part is reflected by the windshield or the combiner. The reflected light is directed toward eyes of the driver. The driver perceives the reflected light entering the eyes as a virtual image viewed as an image of an object positioned on an opposite side (the outside of an automobile) of the windshield or the combiner against a background of a real object that can be seen through the windshield or the combiner.

### CITATION LIST

### PATENT LITERATURE

Patent Literature 1: JP-A-2018-45103

### SUMMARY OF INVENTION

### TECHNICAL PROBLEM

An object of the present disclosure is to provide a compact head-up display capable of generating a 3D virtual image object.

### SOLUTION TO PROBLEM

A head-up display according to an aspect of the present disclosure is a head-up display provided in a vehicle and configured to display a predetermined image toward an occupant of the vehicle, the head-up display including:
an image generator configured to emit light for generating the predetermined image;
a light guide body configured to propagate the light emitted from the image generator while totally reflecting the light;
a first changer configured to change a direction of the light so that the light emitted from the image generator is totally reflected inside the light guide body;
a second changer configured to change a direction of the light so that light that propagates while being totally reflected inside the light guide body is emitted from the light guide body; and
a microlens array configured to refract incident light in a predetermined direction and emit the refracted light.
The microlens array is provided after the second changer in an optical path of the light.

According to the above configuration, the light emitted from the image generator is propagated using the first changer, the light guide body, and the second changer. This makes it possible to increase an optical path length while preventing an increase in a size of the HUD. In addition, the microlens array refracts the incident light in the predetermined direction and emits the refracted light. As a result, a 3D virtual image object can be generated. Further, by generating the 3D virtual image object using the microlens array, a compact structure can be realized as compared with a case where a virtual image object is generated using a concave mirror. As a result, a compact head-up display capable of generating the 3D virtual image object can be provided.

Each of the first changer and the second changer may be a holographic optical element.

According to the above configuration, by diffracting the light by the holographic optical element, it is possible to change the direction of the light with a compact configuration.

### ADVANTAGEOUS EFFECTS OF INVENTION

According to the present disclosure, it is possible to provide the compact head-up display capable of generating the 3D virtual image object.

### BRIEF DESCRIPTION OF DRAWINGS

Fig. 1 is a block diagram of a vehicle system according to an embodiment of the present disclosure.
Fig. 2 is a schematic diagram illustrating a configuration of an HUD of the vehicle system of Fig. 1.
Fig. 3 is a diagram illustrating a reference example of an HUD main body portion including an image generator and a microlens array.
Fig. 4 is a diagram illustrating the HUD main body portion of Fig. 2.
Fig. 5 is a schematic diagram illustrating a configuration of an HUD according to a modification.

### DESCRIPTION OF EMBODIMENTS

Hereinafter, an embodiment of the present disclosure (hereinafter, referred to as the present embodiment) will be described with reference to the drawings. Dimensions of members illustrated in the drawings may be different from actual dimensions of the respective members for the sake of convenience of description.

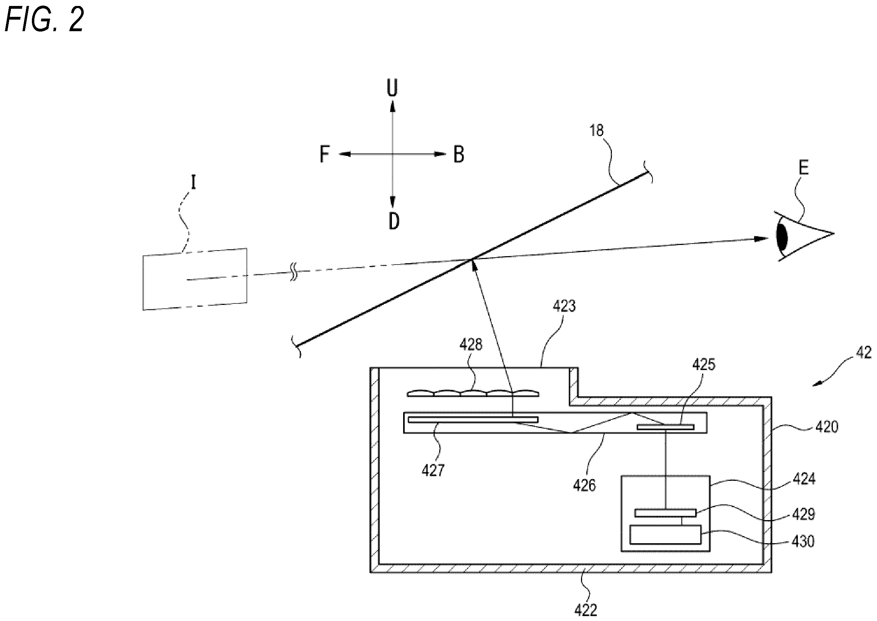

In the description of the present embodiment, for convenience of description, a "left-right direction", an "upper-lower direction", and a "front-rear direction" may be referred to as appropriate. These directions are relative directions set for a head-up display (HUD) 42 illustrated in Fig. 2. In Fig. 2, U denotes an upper side, D denotes a lower side, F denotes a front side, and B denotes a rear side. Here, the "left-right direction" is a direction including a "left direction" and a "right direction". The "upper-lower direction" is a direction including an "upper direction" and a "lower direction". The "front-rear direction" is a direction including a "front direction" and a "rear direction". Although not illustrated in Fig. 2, the left-right direction is a direction orthogonal to the upper-lower direction and the front-rear direction.

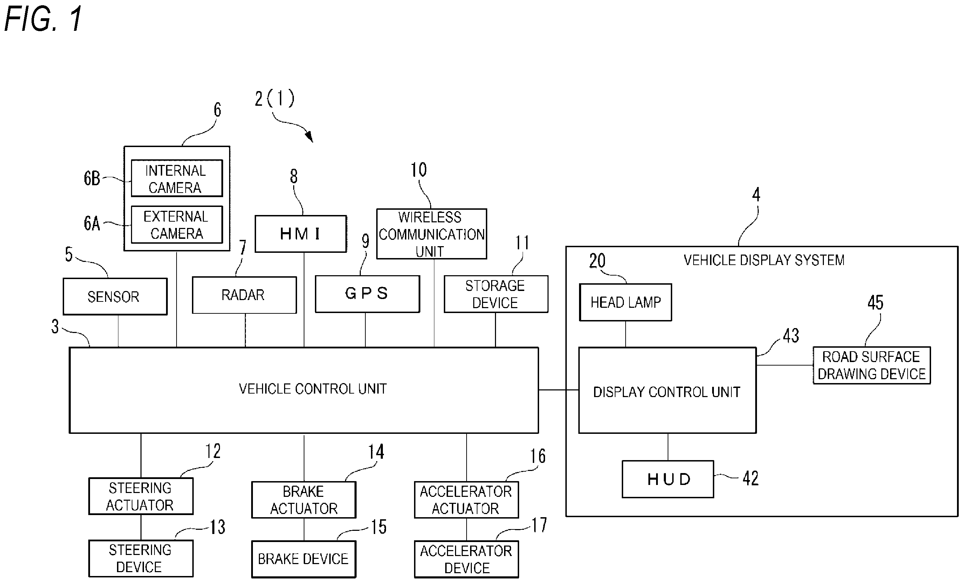

First, a vehicle system 2 according to the present embodiment will be described with reference to Fig. 1. Fig. 1 is a block diagram of the vehicle system 2. A vehicle 1 on which the vehicle system 2 is mounted is a vehicle (automobile) that can travel in an automatic driving mode.

As illustrated in Fig. 1, the vehicle system 2 includes a vehicle control unit 3, a vehicle display system 4 (hereinafter, simply referred to as a "display system 4"), a sensor 5, a camera 6, and a radar 7. Further, the vehicle system 2 includes a human machine interface (HMI) 8, a global positioning system (GPS) 9, a wireless communication unit 10, a storage device 11, a steering actuator 12, a steering device 13, a brake actuator 14, a brake device 15, an accelerator actuator 16, and an accelerator device 17.

The vehicle control unit 3 is configured to control traveling of the vehicle. The vehicle control unit 3 is configured with, for example, at least one electronic control unit (ECU). The electronic control unit includes a computer system including one or more processors and one or more memories (for example, a system on a chip (SoC)), and an electronic circuit including an active element such as a transistor and a passive element. The processor includes, for example, at least one of a central processing unit (CPU), a micro processing unit (MPU), a graphics processing unit (GPU), and a tensor processing unit (TPU). The CPU may be configured with a plurality of CPU cores. The GPU may be configured with a plurality of GPU cores. The memory includes a read only memory (ROM) and a random access memory (RAM). The ROM may store a vehicle control program. For example, the vehicle control program may include an artificial intelligence (AI) program for automatic driving. The AI program is a program (learned model) constructed by supervised or unsupervised machine learning (in particular, deep learning) using a multi-layer neural network. The RAM may temporarily store the vehicle control program, vehicle control data, and/or surrounding environment information indicating a surrounding environment of the vehicle. The processor may be configured to load a program designated from various vehicle control programs stored in the ROM onto the RAM and execute various processes in cooperation with the RAM. Further, the computer system may be configured with a non-Von Neumann computer such as an application specific integrated circuit (ASIC) or a field-programmable gate array (FPGA). Furthermore, the computer system may be configured with a combination of a Von Neumann computer and a non-Von Neumann computer.

The sensor 5 includes at least one of an acceleration sensor, a speed sensor, and a gyro sensor. The sensor 5 is configured to detect a traveling state of the vehicle and output traveling state information to the vehicle control unit 3. The sensor 5 may further include a seating sensor that detects whether a driver is sitting on a driver seat, a face direction sensor that detects a direction of a face of the driver, an external weather sensor that detects an external weather condition, a human sensor that detects whether there is a person in the vehicle, and the like. The driver is an example of an occupant of the vehicle 1.

The camera 6 is, for example, a camera including an imaging element such as a charge-coupled device (CCD) or a complementary MOS (CMOS). The camera 6 includes one or more external cameras 6A and an internal camera 6B. The external camera 6A is configured to acquire image data indicating a surrounding environment of the vehicle and then transmit the image data to the vehicle control unit 3. The vehicle control unit 3 acquires the surrounding environment information based on the transmitted image data. Here, the surrounding environment information may include information on an object (a pedestrian, other vehicles, a sign, or the like) that exists outside the vehicle. For example, the surrounding environment information may include information on an attribute of the object that exists outside the vehicle and information on a distance and a position of the object with respect to the vehicle. The external camera 6A may be configured as a monocular camera or a stereo camera.

The internal camera 6B is disposed inside the vehicle and is configured to acquire image data indicating the occupant. The internal camera 6B functions as a tracking camera that tracks a viewpoint E of the occupant. Here, the viewpoint E of the occupant may be either a viewpoint of a left eye or a viewpoint of a right eye of the occupant. Alternatively, the viewpoint E may be defined as a midpoint of a line segment connecting the viewpoint of the left eye and the viewpoint of the right eye.

The radar 7 includes at least one of a millimeter wave radar, a microwave radar, and a laser radar (for example, a LiDAR unit). For example, the LiDAR unit is configured to detect the surrounding environment of the vehicle. In particular, the LiDAR unit is configured to acquire 3D mapping data (point group data) indicating the surrounding environment of the vehicle and then transmit the 3D mapping data to the vehicle control unit 3. The vehicle control unit 3 specifies the surrounding environment information based on the transmitted 3D mapping data.

The HMI 8 includes an input unit that receives an input operation from the driver, and an output unit that outputs traveling information and the like to the driver. The input unit includes a steering wheel, an accelerator pedal, a brake pedal, a driving mode switching switch that switches a driving mode of the vehicle, and the like. The output unit is a display (excluding the HUD) that displays various pieces of traveling information. The GPS 9 is configured to acquire current position information of the vehicle and output the acquired current position information to the vehicle control unit 3.

The wireless communication unit 10 is configured to receive information (for example, traveling information and the like) on other vehicles around the vehicle from another vehicle, and transmit information on the vehicle (for example, traveling information and the like) to the other vehicle (vehicle-to-vehicle communication). The wireless communication unit 10 is configured to receive infrastructure information from infrastructure equipment such as a traffic light and a sign lamp, and transmit the traveling information of the vehicle 1 to the infrastructure equipment (road-to-vehicle communication). In addition, the wireless communication unit 10 is configured to receive information on a pedestrian from a portable electronic device (a smart phone, a tablet, a wearable device, or the like) carried by the pedestrian, and transmit own vehicle traveling information of the vehicle to the portable electronic device (pedestrian-to-vehicle communication). The vehicle may directly communicate with another vehicle, the infrastructure equipment, or the portable electronic device in an Ad hoc mode, or may communicate with the other vehicle, the infrastructure equipment, or the portable electronic device via an access point. Further, the vehicle may communicate with another vehicle, the infrastructure equipment, or the portable electronic device via a communication network (not shown). The communication network includes at least one of the Internet, a local area network (LAN), a wide area network (WAN) and a radio access network (RAN). A wireless communication standard is, for example, Wi-Fi (registered trademark), Bluetooth (registered trademark), ZigBee (registered trademark), LPWA, DSRC (registered trademark) or Li-Fi. In addition, the vehicle 1 may communicate with another vehicle, the infrastructure equipment, the portable electronic device using a fifth generation mobile communication system (5G).

The storage device 11 is an external storage device such as a hard disk drive (HDD) or a solid state drive (SSD). The storage device 11 may store two-dimensional or three-dimensional map information and/or the vehicle control program. For example, the three-dimensional map information may be configured by the 3D mapping data (point group data). The storage device 11 is configured to output the map information and the vehicle control program to the vehicle control unit 3 in response to a request from the vehicle control unit 3. The map information and the vehicle control program may be updated via the wireless communication unit 10 and the communication network.

When the vehicle travels in the automatic driving mode, the vehicle control unit 3 automatically generates at least one of a steering control signal, an accelerator control signal, and a brake control signal based on the traveling state information, the surrounding environment information, the current position information, the map information, and the like. The steering actuator 12 is configured to receive the steering control signal from the vehicle control unit 3 and control the steering device 13 based on the received steering control signal. The brake actuator 14 is configured to receive the brake control signal from the vehicle control unit 3 and control the brake device 15 based on the received brake control signal. The accelerator actuator 16 is configured to receive the accelerator control signal from the vehicle control unit 3 and control the accelerator device 17 based on the received accelerator control signal. As described above, the vehicle control unit 3 automatically controls the traveling of the vehicle based on the traveling state information, the surrounding environment information, the current position information, the map information, and the like. That is, in the automatic driving mode, the traveling of the vehicle is automatically controlled by the vehicle system 2.

On the other hand, when the vehicle 1 travels in a manual driving mode, the vehicle control unit 3 generates a steering control signal, an accelerator control signal, and a brake control signal in accordance with a manual operation of the driver with respect to the accelerator pedal, the brake pedal, and the steering wheel. As described above, in the manual driving mode, since the steering control signal, the accelerator control signal, and the brake control signal are generated by the manual operation of the driver, the traveling of the vehicle is controlled by the driver.

The display system 4 includes head lamps 20, road surface drawing devices 45, the HUD 42, and a display control unit 43.

The head lamps 20 are disposed on the left side and the right side of a front surface of the vehicle, and each of the head lamps 20 includes a low beam lamp configured to irradiate the front of the vehicle with a low beam and a high beam lamp configured to irradiate the front of the vehicle 1 with a high beam. Each of the low beam lamp and the high beam lamp includes one or more light emitting elements such as a light emitting diode (LED) and a laser diode (LD), and an optical member such as a lens and a reflector.

The road surface drawing devices 45 are disposed in lamp chambers of the respective head lamps 20. The road surface drawing device 45 is configured to emit a light pattern toward a road surface outside the vehicle. The road surface drawing device 45 includes, for example, a light source unit, a drive mirror, an optical system such as a lens and a mirror, a light source drive circuit, and a mirror drive circuit. The light source unit is a laser light source or an LED light source. For example, the laser light source is an RGB laser light source configured to emit red laser light, green laser light and blue laser light, respectively. The drive mirror is, for example, a micro electro mechanical systems (MEMS) mirror, a digital mirror device (DMD), a galvano mirror, a polygon mirror, or the like. The light source drive circuit is configured to control driving of the light source unit. The light source drive circuit is configured to generate a control signal for controlling an operation of the light source unit based on a signal related to a predetermined light pattern transmitted from the display control unit 43, and then transmit the generated control signal to the light source unit. The mirror drive circuit is configured to control driving of the drive mirror. The mirror drive circuit is configured to generate a control signal for controlling an operation of the drive mirror based on the signal related to the predetermined light pattern transmitted from the display control unit 43, and then transmit the generated control signal to the drive mirror. When the light source unit is an RGB laser light source, the road surface drawing device 45 can draw light patterns of various colors on a road surface by performing scanning with laser light. For example, the light pattern may be an arrow-shaped light pattern indicating a traveling direction of the vehicle.

A drawing method of the road surface drawing device 45 may be a raster scan method, a digital light processing (DLP) method, or a liquid crystal on silicon (LCOS) method. When the DLP method or the LCOS method is adopted, the light source unit may be the LED light source. In addition, as a drawing method of the road surface drawing device, a projection method may be adopted. When the projection method is adopted, the light source unit may be a plurality of LED light sources arranged in a matrix. The road surface drawing device 45 may be disposed in the lamp chamber of each of the left and right head lamps, or may be disposed on a vehicle body roof, a bumper, or a grille portion.

The display control unit 43 is configured to control operations of the road surface drawing device 45, the head lamp 20, and the HUD 42. The display control unit 43 is configured by an electronic control unit (ECU). The electronic control unit includes a computer system including one or more processors and one or more memories (for example, a SoC), and an electronic circuit including an active element such as a transistor and a passive element. The processor includes at least one of a CPU, an MPU, a GPU, and a TPU. The memory includes a ROM and a RAM. Further, the computer system may be configured with a non-Von Neumann computer such as an ASIC or an FPGA. The display control unit 43 may specify a position of the viewpoint E of the occupant based on the image data acquired by the internal camera 6B. The position of the viewpoint E of the occupant may be updated at a predetermined cycle based on the image data, or may be determined only once when the vehicle is started.

In the present embodiment, the vehicle control unit 3 and the display control unit 43 are provided as separate components, but the vehicle control unit 3 and the display control unit 43 may be integrally configured. In this regard, the display control unit 43 and the vehicle control unit 3 may be configured by a single electronic control unit. Further, the display control unit 43 may be configured by two electronic control units, that is, an electronic control unit configured to control the operations of the head lamp 20 and the road surface drawing device 45, and an electronic control unit configured to control the operation of the HUD 42.

At least a part of the HUD 42 is positioned inside the vehicle. Specifically, the HUD 42 is installed at a predetermined location in a vehicle interior. For example, the HUD 42 may be disposed in a dashboard of the vehicle. The HUD 42 functions as a visual interface between the vehicle and the occupant. The HUD 42 is configured to display HUD information to the occupant such that predetermined information (hereinafter, referred to as HUD information) is superimposed on a real space outside the vehicle (in particular, the surrounding environment in front of the vehicle). In this way, the HUD 42 functions as an augmented reality (AR) display. The HUD information displayed by the HUD 42 is, for example, vehicle traveling information on the traveling of the vehicle and/or surrounding environment information on the surrounding environment of the vehicle (in particular, information on an object existing outside the vehicle).

As illustrated in Fig. 2, the HUD 42 includes an HUD main body portion 420. The HUD main body portion 420 includes a housing 422 and an emission window 423. The emission window 423 is a transparent plate through which visible light is transmitted. The HUD main body portion 420 includes an image generator (PGU: picture generation unit) 424, an incidence holographic optical element 425, a light guide body 426, an emission holographic optical element 427, and a microlens array 428 inside the housing 422. The incidence holographic optical element 425 and the emission holographic optical element 427 are hereinafter referred to as an incidence HOE 425 and an emission HOE 427, respectively. The incidence HOE 425 is an example of a first changer. The emission HOE 427 is an example of a second changer.

The image generator 424 includes a light source (not illustrated), an optical component (not illustrated), a display device 429, and a control board 430. The light source is, for example, a laser light source or an LED light source. The laser light source is, for example, an RGB laser light source configured to emit red laser light, green laser light and blue laser light, respectively. The optical component appropriately includes a prism, a lens, a diffusion plate, a magnifying glass and the like. The display device 429 is, for example, a light emitting array (in which a plurality of light source bodies are arranged in an array), or the like. Incidentally, the display device is not limited to the light emitting array. For example, the display device may be a device that displays 2D, such as a liquid crystal display, a digital mirror device (DMD), or a micro LED display. A drawing method of the image generator 424 may be a raster scan method, a DLP method, or an LCOS method. When the DLP method or the LCOS method is adopted, the light source of the image generator 424 may be the LED light source. Incidentally, when the liquid crystal display method is adopted, the light source of the image generator 424 may be a white LED light source.

The control board 430 is configured to control an operation of the display device 429. The control board 430 is provided with a processor such as a central processing unit (CPU) and a memory, and the processor executes a computer program read from the memory to control the operation of the display device 429. The control board 430 is configured to generate a control signal for controlling the operation of the display device 429 based on the image data transmitted from the display control unit 43, and then transmit the generated control signal to the display device 429. Incidentally, the control board 430 may be configured as a part of the display control unit 43.

The incidence HOE 425 is disposed on an optical path of the light emitted from the image generator 424 inside the light guide body 426. The incidence HOE 425 is configured to diffract the light emitted from the image generator 424 and incident on the light guide body 426 in a predetermined direction. The incidence HOE 425 is a transmission HOE that transmits and diffracts the incident light. For example, the incidence HOE 425 is configured by sandwiching a transparent glass substrate having a photopolymer film attached to its surface between two base materials made of resin or glass. The incidence HOE 425 may be disposed outside the light guide body 426. In this case, the incidence HOE 425 is configured to diffract the light emitted from the image generator 424 such that the light emitted from the image generator 424 is incident on the light guide body 426 at a predetermined angle.

The light guide body 426 is formed of a transparent resin such as acryl or polycarbonate. The light guide body 426 propagates the light diffracted by the incidence HOE 425 while totally reflecting the light.

The emission HOE 427 is disposed on an optical path of the light propagated in the light guide body 426 inside the light guide body 426. The emission HOE 427 is configured to diffract the light propagated in the light guide body 426 in a predetermined direction such that the light propagated inside the light guide body 426 is emitted from the light guide body 426 toward the microlens array 428. The emission HOE 427 is a transmission HOE that transmits and diffracts the incident light. For example, the emission HOE 427 is configured by sandwiching a transparent glass substrate having a photopolymer film attached to its surface between two base substrates made of resin or glass. The emission HOE 427 may be a reflective HOE that reflects the incident light and diffracts the light in a predetermined direction.

The microlens array 428 is disposed on the optical path of the light emitted from the light guide body 426. The microlens array 428 is configured by arranging a plurality of minute convex lenses in a two-dimensional manner. The microlens array 428 refracts the light emitted from the light guide body 426 and incident on the microlens array 428 in a predetermined direction and emits the light toward a windshield 18. The light emitted from the microlens array 428 is emitted as light for generating a 2D image (planar image) of the display device 429 as a 3D image (stereoscopic image) by a light field method.

The light emitted from the HUD main body portion 420 is radiated to the windshield 18 (for example, a front window of the vehicle 1). Next, a part of the light emitted from the HUD main body portion 420 to the windshield 18 is reflected toward the viewpoint E of the occupant. As a result, the occupant recognizes the light (predetermined 3D image) emitted from the HUD main body portion 420 as a 3D virtual image formed at a predetermined distance in front of the windshield 18. In this way, as a result of an image displayed by the HUD 42 being superimposed on the real space in front of the vehicle 1 through the windshield 18, the occupant can visually recognize a 3D virtual image object I formed by the predetermined image so that the 3D virtual image object I floats on a road positioned outside the vehicle.

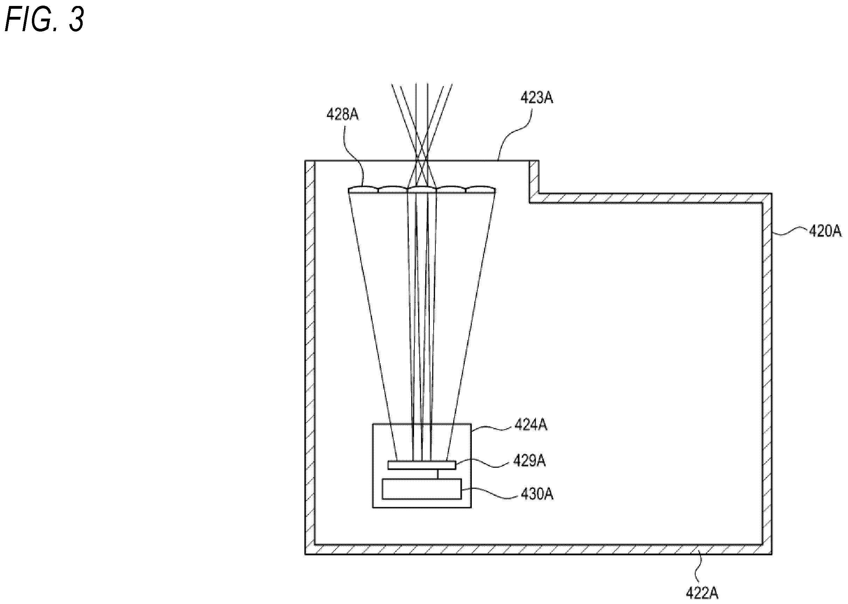

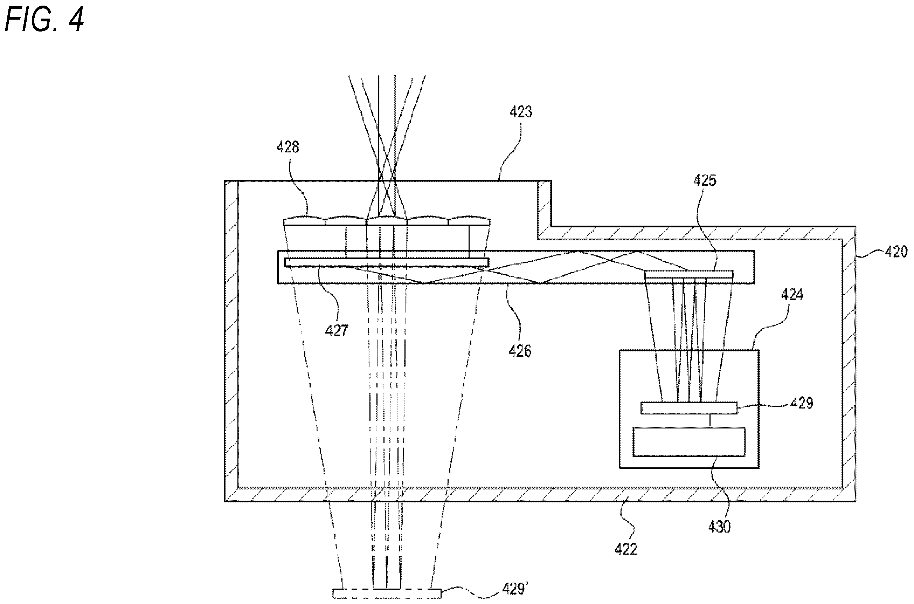

Next, the HUD main body portion 420 according to the present embodiment will be described below with reference to Figs. 3 and 4. Fig. 3 is a diagram illustrating a reference example of an HUD main body portion 420A including an image generator 424A and a microlens array 428A. Fig. 4 is a diagram illustrating the HUD main body portion 420 of Fig. 2. Members having the same reference numerals as those already described in the above description will be omitted for convenience of description.

The HUD main body portion 420A of Fig. 3 includes a housing 422A and an emission window 423A. The HUD main body portion 420A includes the image generator 424A and the microlens array 428A inside the housing 422A. The image generator 424A includes a light source (not illustrated), an optical component (not illustrated), a display device 429A, and a control board 430A. The control board 430A generates a control signal for controlling an operation of the display device 429A based on the image data transmitted from the display control unit 43, and then transmits the generated control signal to the display device 429A.

The microlens array 428A is disposed to face the image generator 424A so as to be disposed on an optical path of light emitted from the image generator 424A. The microlens array 428A refracts the light emitted from the image generator 424A and incident on the microlens array 428A in a predetermined direction and emits the refracted light toward the windshield 18. According to the light field method, the light emitted from the microlens array 428A is emitted as light for generating a 2D image (planar image) of the display device 429A as a 3D image (stereoscopic image).

The display device 429A is disposed so that the occupant can recognize the light (predetermined image) emitted from the HUD main body portion 420A as a virtual image formed at a predetermined distance in front of the windshield 18. That is, the display device 429A is disposed so as to be separated from the microlens array 428A by a distance corresponding to the predetermined distance in front of the windshield 18. Therefore, an overall size of the HUD main body portion 420A (housing 422A) is increased.

The HUD main body portion 420 of the present embodiment illustrated in Fig. 4 virtualizes the display device 429A in Fig. 3 using the incidence HOE 425, the light guide body 426, and the emission HOE 427. Therefore, even if the size of the entire HUD main body portion 420 (housing 422) is not increased, the occupant can recognize the virtual image formed at the predetermined distance in front of the windshield 18 from the light (predetermined image) emitted from the HUD main body portion 420.

In Fig. 4, the light of the image formed by the display device 429 is incident on the light guide body 426, is propagated by repeating total reflection inside the light guide body 426 via the incidence HOE 425, and is emitted from the light guide body 426 via the emission HOE 427. The microlens array 428 refracts the light emitted from the light guide body 426 and incident on the microlens array 428 in the predetermined direction and emits the refracted light toward the windshield 18. According to the light field method, the light emitted from the microlens array 428 is emitted as the light for generating the 2D image (planar image) of the display device 429 as the 3D image (stereoscopic image).

In the HUD main body portion 420 of the present embodiment, by using the incidence HOE 425, the light guide body 426, and the emission HOE 427, the light emitted from the light guide body 426 is incident on the microlens array 428 in the same optical path as the light (two-dot chain line) emitted from a virtual image 429' of the display device. Therefore, it is not necessary to provide the display device 429 at a position facing the microlens array 428, and it is possible to prevent an increase in a size of the HUD main body portion 420. In addition, since the light incident on the light guide body 426 repeats reflection, a long optical path length can be obtained without forming a long light guide body 426. As a result, it is possible to increase a distance at which the virtual image object I is visually recognized (generate the virtual image object I at a distant position). By adopting a structure having a lens effect, the emission HOE 427 may change a magnification for generating the virtual image object I and a virtual image position of the virtual image object I.

As described above, in the present embodiment, the light guide body 426 propagates the light emitted from the image generator 424 while totally reflecting the light, and emits the light toward the microlens array 428. The incidence HOE 425 changes a direction of the light so that the light emitted from the image generator 424 is totally reflected in the light guide body 426. The emission HOE 427 changes a direction of the light so that the light that propagates while being totally reflected inside the light guide body 426 is emitted from the light guide body 426. This makes it possible to increase the optical path length while preventing an increase in a size of the HUD. In addition, the microlens array 428 refracts the light emitted from the light guide body 426 and incident on the microlens array 428 in the predetermined direction and emits the refracted light. As a result, the 3D virtual image object I can be generated. Further, by generating the 3D virtual image object I using the microlens array 428, a compact structure can be realized as compared with a case where a virtual image object is generated using a concave mirror. As a result, it is possible to provide a head-up display capable of generating the 3D virtual image object with the compact structure.

Although the embodiment of the present disclosure has been described above, it is needless to say that the technical scope of the present disclosure should not be interpreted in a limited manner by the description of the present embodiment. It is to be understood by those skilled in the art that the present embodiment is merely an example and various modifications may be made within the scope of the invention described in the claims. The technical scope of the present disclosure should be determined based on the scope of the invention described in the claims and a scope of equivalents thereof.

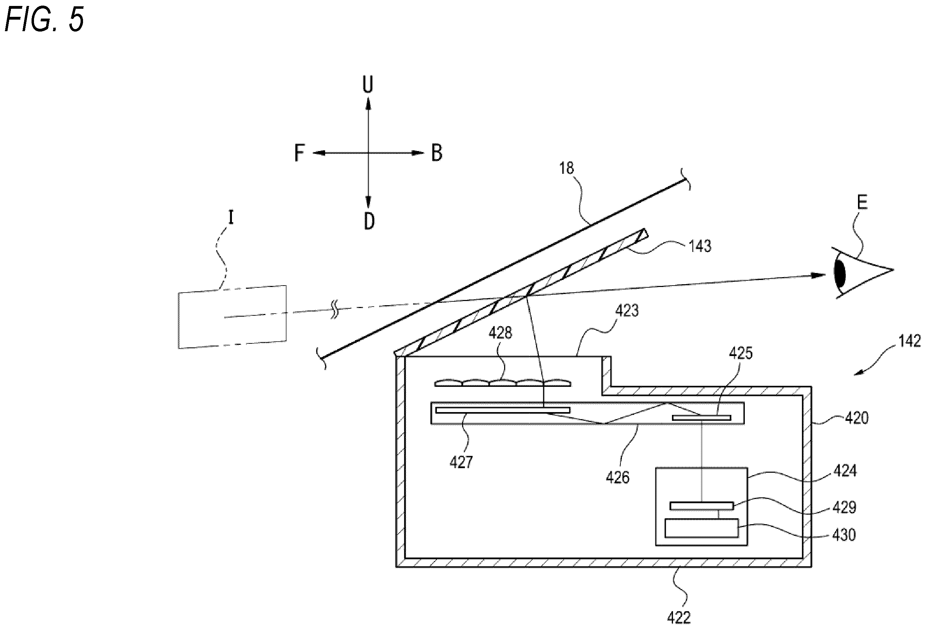

Fig. 5 is a schematic diagram illustrating a configuration of an HUD 142 according to a modification.

As shown in Fig. 5, the HUD 142 according to the modification includes the HUD main body portion 420 and a combiner 143. The combiner 143 is provided inside the windshield 18 as a structure separate from the windshield 18. The combiner 143 is, for example, a transparent plastic disk, and is irradiated with the light emitted from the microlens array 428 instead of the windshield 18. Accordingly, similar to the case where the light is emitted to the windshield 18, a part of light emitted from the HUD main body portion 420 to the combiner 143 is reflected toward the viewpoint E of the occupant. As a result, the occupant can recognize the light emitted from the HUD main body portion 420 (predetermined image) as the virtual image formed at a predetermined distance in front of the combiner 143 (and the windshield 18).

In the present embodiment, the direction of the light is changed using the holographic optical element, but the present invention is not limited thereto. For example, a diffractive optical element (DOE) or the like may be used.

In the above embodiment, the 3D virtual image object is generated using the microlens array 428, but the present invention is not limited thereto. An optical element having the same effect as that of the microlens array, for example, an HOE may be used.

The present application is based on a Japanese Patent Application No. 2018-225179 filed on November 30, 2018, and the contents of which are incorporated herein by reference.

## Claims

1. A head-up display provided in a vehicle and configured to display a predetermined image toward an occupant of the vehicle, the head-up display comprising:
an image generator configured to emit light for generating the predetermined image;
a light guide body configured to propagate the light emitted from the image generator while totally reflecting the light;
a first changer configured to change a direction of the light so that the light emitted from the image generator is totally reflected inside the light guide body;
a second changer configured to change a direction of the light so that light that propagates while being totally reflected inside the light guide body is emitted from the light guide body; and
a microlens array configured to refract incident light in a predetermined direction and emit the refracted light,
wherein the microlens array is provided after the second changer in an optical path of the light.

2. The head-up display according to claim 1,
wherein each of the first changer and the second changer is a holographic optical element.
